# EUROPEAN PATENT APPLICATION

(11) **EP 4 431 725 A1**
(43) Date of publication of application: **18.09.2024**
(21) Application number: 22892941.0
(22) Date of filing: 28.01.2022
(51) Int. Cl.: F03D 1/06, B29C 70/06, B29C 70/42, B29L 31/08

(54) **MODULAR SPAR CAP STRUCTURE, METHOD FOR MANUFACTURING SAME, BLADE FOR WIND TURBINE COMPRISING MODULAR SPAR CAP STRUCTURE, AND METHOD FOR MANUFACTURING SAME**

(30) Priority: 10.11.2021 KR 20210154080
(71) Applicant: KOREA INSTITUTE OF MATERIALS SCIENCE, Gyeongsangnam-do 51508 (KR)
(72) Inventor: KANG, Min Gyu, Changwon-si, Gyeongsangnam-do 51511 (KR); PARK, Ji Sang, Changwon-si, Gyeongsangnam-do 51499 (KR); LEE, Woo Kyoung, Changwon-si, Gyeongsangnam-do 51511 (KR); JO, Kwang Hoon, Changwon-si, Gyeongsangnam-do 51723 (KR)
(74) Representative: SONN Patentanwälte GmbH & Co KG
(86) International application number: PCT/KR2022/001603
(87) International publication number: WO 2023/085518

(57) **Abstract**

Provided is a modular spar cap structure for a blade of a wind power generator. The modular spar cap structure according to an embodiment of the present invention includes: a core member formed in the shape of a bar that extends in a direction in which the blade extends; shear web support members coupled to both side portions of the core member to support shear webs of the blade; an upper support member coupled to an upper portion of the core member; and a lower support member coupled to a lower portion of the core member, wherein the core member, the shear web support members, the upper support member, and the lower support member are formed to be modularized.

## Description

### [Technical Field]

The present invention relates to a spar cap structure of a blade for a wind power generator, and more particularly, to a modular spar cap structure provided in a blade of a wind power generator and a manufacturing method thereof, a blade for a wind power generator including the modular spar cap structure, and a manufacturing method thereof.

Meanwhile, the present application was supported by the following national research and development project.
[National R&D Project that supported this invention]
[Task Identification Number] 1415167269
[Task Number] 20193010025810
[Name of Ministry] Ministry of Trade, Industry and Energy
[Name of (Specialized) Institute in charge of Task Management] Korea Institute of Energy Technology Evaluation and Planning
[Research Project Name] New Renewable Energy Core Technology
[Research Task Name] Development of load reduction design technology for reliability improvement and weight reduction of wind turbine (3/3)
[Contribution Rate] 1/1
[Name of Institute in charge of Task Performance] Institute for Advanced Engineering
[Research Period] January 01, 2021 - December 31, 2021

### [Background Art]

A blade used in a wind power generator is made of a suction shell, a pressure shell, and a shear web.

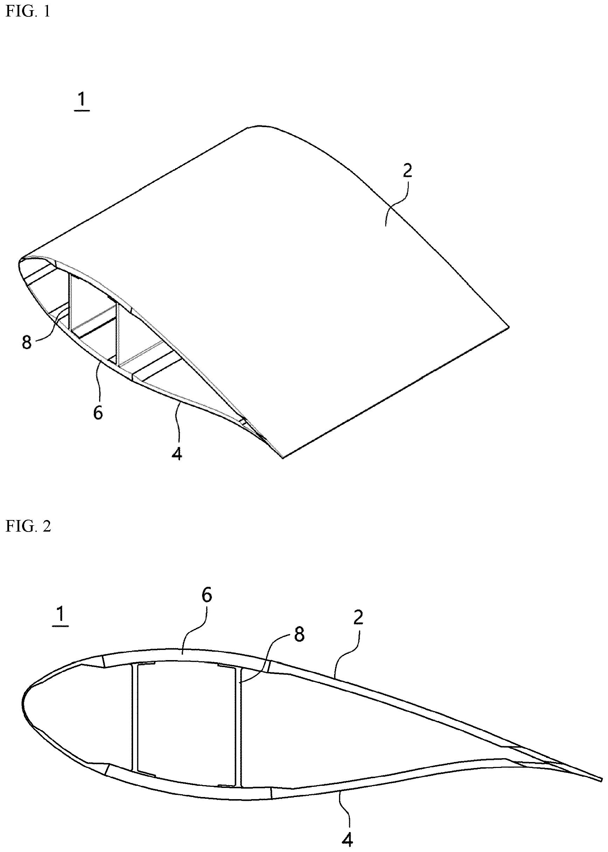

FIG. 1 is a perspective view illustrating a cross-section of a typical blade of a wind power generator. FIG. 2 is a front view of the cross-section of FIG. 1. As can be seen from FIGS. 1 and 2, in a blade of a wind power generator, a suction shell 2 and a pressure shell 4 form both surfaces of a blade 1, and a cross-section formed by the suction shell 2 and the pressure shell 4 is formed in an airfoil shape.

Meanwhile, a pair of shear webs 8 may be disposed between the suction shell 2 and the pressure shell 4 to increase internal stiffness of the blade 1. Also, a spar cap 6 may be formed at each of the suction shell 2 and the pressure shell 4 to support the shear webs 8. Here, positions at which the shear webs are provided are not limited to positions where the spar caps are formed, and additional webs may be provided at the skin or a trailing edge portion according to the structure of the blade.

The spar caps correspond to components that are the thickest and heaviest among components of the blade except for a root portion of the blade and support most of the bending load of the blade and have a dominant role in the stiffness of the blade. To this end, the conventional spar caps 6 are typically formed by laminating unidirectional glass fibers on the suction shell 2 and the pressure shell 4 in a direction in which the blade 1 extends.

Nowadays, due to the increase in the size of blades, a carbon material is used in spar caps to reduce the weight of blades.

However, when spar caps of blades are manufactured using a carbon material as mentioned above, for the spar caps to have structural stiffness higher than or equal to the structural stiffness of the conventional glass fiber composite materials, the carbon material has to be designed to have a small thickness due to the high stiffness of the carbon material. Blades to which the carbon material having a small thickness as described above is applied have a problem in that a risk of buckling increases due to a compressive load.

In order to prevent a decrease in the thickness when applying the carbon material to blades, conventionally, a width of a portion of a blade to which the carbon material is applied is reduced, and a thickness of the blade is increased to avoid buckling. However, in such a design method, it is difficult to install two shear webs on the blade due to a decreased width of spar caps, and thus a structure in which a single shear web is disposed in a blade has been proposed.

However, when a single shear web is disposed in a blade as described above, there is a problem in that structural stability for supporting torsion in the blade is low.

Therefore, there is a need to develop a blade that has a high bending stiffness and a stable torsion support structure due to two shear webs being able to be provided while a weight of the blade is reduced.

### [Disclosure]

### [Technical Problem]

The present invention has been devised to address the problems described above and is directed to providing a blade that has a high bending stiffness and a stable torsion support structure while a weight of the blade is reduced.

### [Technical Solution]

One aspect of the present invention provides a modular spar cap structure for a blade of a wind power generator, the modular spar cap structure including: a core member formed in the shape of a bar that extends in a direction in which the blade extends; shear web support members coupled to both side portions of the core member to support shear webs of the blade; an upper support member coupled to an upper portion of the core member; and a lower support member coupled to a lower portion of the core member, wherein the core member, the shear web support members, the upper support member, and the lower support member are modularized.

Here, the shear web support members may be formed of a carbon fiber composite material.

Here, the core member may be formed of a lighter material than the shear web support members.

Here, each of the core member, the shear web support members, the upper support member, and the lower support member which are modularized may have a rectangular parallelepiped shape.

Here, the core member, the shear web support members, the upper support member, and the lower support member which are modularized may have a rectangular parallelepiped shape.

Here, a front-rear width of the core member and a front-rear width of each of the upper support member and the lower support member may be the same.

Here, thicknesses of the upper support member and the lower support member may be the same.

Here, the shear web support members may be disposed between the upper support member and the lower support member.

Here, a width of the core member may be 20% to 90% of a width of the spar cap structure.

Here, a width of the core member may be less than or equal to a difference between a width of the spar cap structure and a sum of widths of coupling portions of the shear webs coupled to the shear web support members.

Here, a thickness of the core member may be 20% to 80% of the overall thickness of the spar cap structure.

Here, each of the shear web support members, the upper support member, and the lower support member may include at least one carbon pultrusion block.

Meanwhile, each of the shear web support members, the upper support member, and the lower support member may include at least one carbon prepreg.

Another aspect of the present invention provides a manufacturing method of a modular spar cap structure for a blade of a wind power generator, the manufacturing method including: a core member and support member providing operation of providing a core member formed in a bar shape, shear web support members coupled to both side portions of the core member, an upper support member coupled to an upper portion of the core member, and a lower support member coupled to a lower portion of the core member; a bagging operation of bagging the core member, the shear web support members, the upper support member, and the lower support member with a bagging film; and a modularizing operation of coupling the core member, the shear web support members, the upper support member, and the lower support member which are bagged.

Here, each of the shear web support members, the upper support member, and the lower support member may include at least one carbon pultrusion block, and the modularizing operation may include an operation of injecting a resin between the core member, the shear web support members, the upper support member, and the lower support member which are bagged and an operation of curing the resin.

Meanwhile, each of the shear web support members, the upper support member, and the lower support member may include at least one carbon prepreg, and in the modularizing operation, the core member, the shear web support members, the upper support member, and the lower support member which are bagged may be modularized by being formed at a predetermined temperature and a predetermined pressure.

Still another aspect of the present invention provides a blade for a wind power generator, the blade including: a suction shell; a pressure shell coupled to a lower portion of the suction shell; and a pair of shear webs coupled between the suction shell and the pressure shell, wherein at least one of the suction shell and the pressure shell includes a core member formed in the shape of a bar that extends in a direction in which the blade extends, and the pair of shear webs are coupled between the suction shell and the pressure shell in an up-down direction to not overlap with the core member.

Here, the blade may further include shear web support members coupled to both side portions of the core member and formed of a carbon fiber composite material to support the shear webs of the blade, and both ends of the pair of shear webs may be formed to be supported by the shear web support members provided at the suction shell and the pressure shell.

Here, each of the suction shell and the pressure shell may further include: an upper support member coupled to an upper portion of the core member; and a lower support member coupled to a lower portion of the core member.

Here, the core member, the shear web support members, the upper support member, and the lower support member may be modularized.

Yet another aspect of the present invention provides a manufacturing method of a blade for a wind power generator, the manufacturing method including: an operation of providing a mold that corresponds to a suction shell and a pressure shell; an operation of laminating an outer skin layer on the mold; providing the above-described modular spar cap structure, a front core disposed in front of the spar cap structure, and a rear core disposed behind the spar cap structure on the outer skin layer; laminating an inner skin layer on the modular spar cap structure, the front core, and the rear core; integrating the suction shell and the pressure shell using a vacuum infusion technique; and coupling the suction shell, the pressure shell, and a pair of shear webs that support the suction shell and the pressure shell.

### [Advantageous Effects]

Due to having a modular spar cap structure laminated in a sandwich form, a blade according to the present invention can have a high bending stiffness and a stable torsion support structure while a weight of the blade is reduced.

According to the present invention, since a core member made of a lightweight material is disposed inside a modular spar cap structure constituting the inside of a shell of a blade, and shear web support members configured to support shear webs are provided at both sides of the core member, the pair of shear webs can remain spaced at a predetermined interval, and thus it is possible to provide a blade having a structure that is highly resistant to torsion.

According to the present invention, since a core member is disposed inside a modular spar cap structure constituting the inside of a shell of a blade, a thickness of the spar cap structure can be maintained to not be small, and thus the blade can have a high bending stiffness.

### [Description of Drawings]

FIG. 1 is a perspective view illustrating a cross-section of a typical blade of a wind power generator.
FIG. 2 is a front view of the cross-section of FIG. 1.
FIG. 3 is a cross-sectional view of a blade for a wind power generator according to one embodiment of the present invention.
FIG. 4 is a view illustrating a portion of the cross-section of the blade for a wind power generator according to one embodiment of the present invention in a state in which components of the blade are exploded.
FIG. 5 is an enlarged view of the cross-section of the blade for a wind power generator according to one embodiment of the present invention in which a spar cap structure is installed.
FIG. 6 is a cross-sectional view of the blade and is a view for describing the position and thickness of a core member in the spar cap structure.
FIG. 7A is a view illustrating an example in which the spar cap structure of the blade for a wind power generator according to one embodiment of the present invention is formed of carbon pultrusion blocks, and FIG. 7B is a view illustrating an example in which the spar cap structure of the blade for a wind power generator according to one embodiment of the present invention is formed of carbon prepregs.
FIG. 8 is a flowchart illustrating one example of a method of manufacturing the spar cap structure of the blade for a wind power generator according to one embodiment of the present invention.
FIG. 9 is a flowchart illustrating another example of a method of manufacturing the spar cap structure of the blade for a wind power generator according to one embodiment of the present invention.
FIG. 10 is a flowchart of a method of manufacturing a shell of the blade for a wind power generator according to one embodiment of the present invention.
FIG. 11 is a flowchart of a method of manufacturing the blade for a wind power generator according to one embodiment of the present invention.
FIG. 12A is a view illustrating a cross-section in which shear webs are installed on shear web support members while deviating from a core member of the spar cap structure in the blade for a wind power generator according to one embodiment of the present invention, and FIG. 12B is a view illustrating a cross-section in which shear webs are installed on the core member of the spar cap structure in the blade for a wind power generator as a comparative example of FIG. 12A.
FIG. 13A is a view illustrating shear stress that acts on the shear webs of the blade for a wind power generator of FIG. 12A. FIG. 13B is a view illustrating shear stress that acts on the shear webs of the blade for a wind power generator of FIG. 12B.
FIGS. 14A to 14D are views illustrating various positions at which the spar cap structure may be installed in the blade for a wind power generator.

### [Modes of the Invention]

Words or terms used in the present specification and the claims should not be interpreted as being limited to their general or dictionary meanings and should be interpreted to have meanings and concepts consistent with the technical spirit of the present invention, according to the principle that the inventor may define terms and concepts thereof in order to describe his or her invention in the best possible way.

Therefore, the embodiments described in the present specification and the configurations illustrated in the drawings are only exemplary embodiments of the present invention and do not represent the entire technical spirit of the present invention, and thus various equivalents and modifications that can replace the embodiments may be present at the time of filing this application.

In the present specification, terms such as "include" or "have" are intended to describe the presence of features, numbers, steps, operations, components, parts, or combinations thereof mentioned herein and should not be understood as precluding the possibility of presence or addition of one or more other features, numbers, steps, operations, components, parts, or combinations thereof.

When a certain component is described as being "in front of," "behind," "above," or "under" another component, unless there is some special circumstance, this not only includes a case in which the component is disposed right "in front of," "behind," "above," or "under" the other component, but also includes a case in which another component is disposed between the two components. Also, when a certain component is described as being "connected" to another component, unless there is some special circumstance, this not only includes a case in which the component and the other component are directly connected to each other, but also includes a case in which the component and the other component are indirectly connected to each other.

Hereinafter, a spar cap structure of a blade for a wind power generator and a blade for a wind power generator including the spar cap structure according to one embodiment of the present invention will be described.

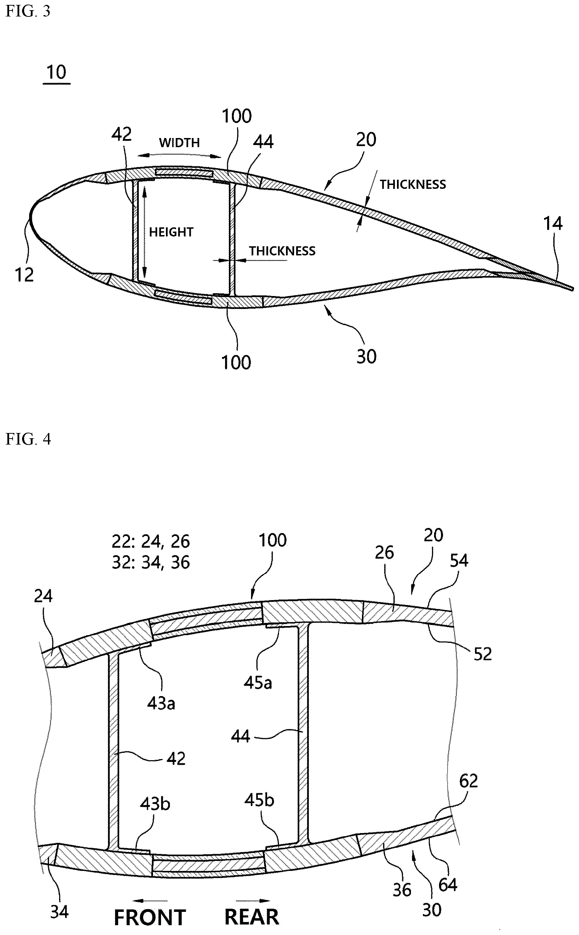

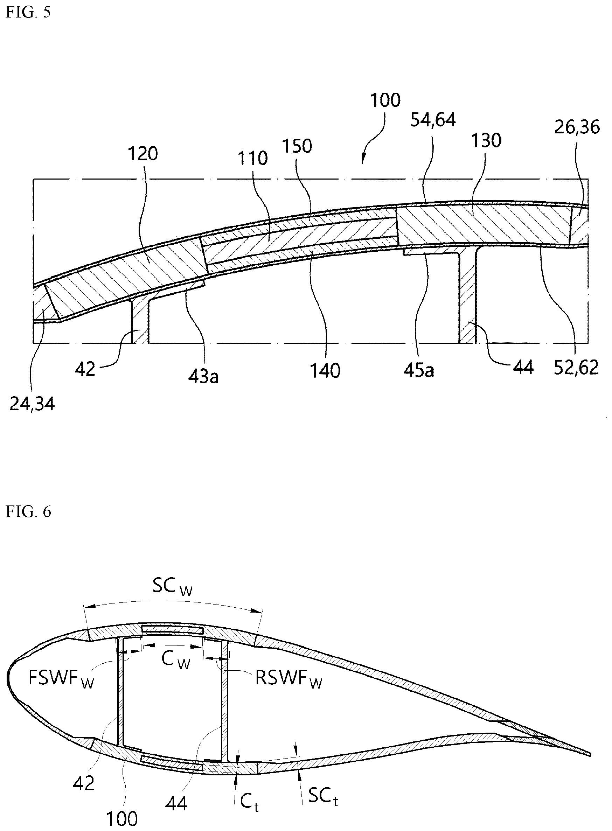

FIG. 3 is a cross-sectional view of a blade for a wind power generator according to one embodiment of the present invention. FIG. 4 is a view illustrating a portion of the cross-section of the blade for a wind power generator according to one embodiment of the present invention in a state in which components of the blade are exploded. FIG. 5 is an enlarged view of the cross-section of the blade for a wind power generator according to one embodiment of the present invention in which a spar cap structure is installed. FIG. 6 is a cross-sectional view of the blade and is a view for describing the position and thickness of a core member in the spar cap structure.

Hereinafter, in the present specification, description will be given while a direction toward a leading edge of the blade in FIGS. 3 and 4 is defined as forward, and a direction toward a trailing edge of the blade is defined as rearward. Also, referring to FIG. 3, a length of a spar cap structure and a length of a core member in a direction from the leading edge of the blade, which is located at the front, toward the trailing edge thereof located at the rear are defined as a width of the spar cap structure and a width of the core member, respectively. Also, referring to FIG. 3, a length of a shear web between a suction shell and a pressure shell in the blade is defined as a height of the shear web. In addition, as can be seen from FIG. 3, a distance between an inner skin and an outer skin of each of a front core and a rear core of the blade is defined as a thickness of each of the front core and the rear core.

Referring to FIGS. 3 and 4, a blade 10 according to one embodiment of the present invention includes a suction shell 20 and a pressure shell 30. Here, the suction shell 20 and the pressure shell 30 form the blade by front ends (leading edges) and rear ends (trailing edges) thereof being coupled to each other. Generally, the suction shell 20 and the pressure shell 30 are referred to as "skin."

The suction shell 20 is formed by cores 22 and a spar cap structure 100 being surrounded by an inner skin 52 and an outer skin 54, and the pressure shell 30 is formed by cores 32 and a spar cap structure 100 being surrounded by an inner skin 62 and an outer skin 64.

The cores 22 include a front core 24 positioned at a front side of the suction shell 20 and a rear core 26 positioned at a rear side thereof, and the cores 32 include a front core 34 positioned at a front side of the pressure shell 30 and a rear core 36 positioned at a rear side thereof.

The front cores 24 and 34 are formed as curved surfaces that are bent to extend rearward from a leading edge 12 of the blade 10 to a central portion thereof, and front ends of the spar cap structures 100 are connected to rear ends of the front cores 24 and 34.

In one embodiment of the present invention, each spar cap structure 100 is formed in the shape of a block that has a rectangular cross-section. Front ends of the rear cores 26 and 36 are connected to rear ends of the spar cap structures 100.

The rear cores 26 and 36 are formed as curved surfaces that are bent to extend from the central portion of the blade 10 to a trailing edge 14 of the blade 10.

Here, the front cores 24 and 34 and the rear cores 26 and 36 may be made of a known core material, for example, balsa wood, polyvinyl chloride (PVC) foam, or the like.

The modular spar cap structure 100 according to one embodiment of the present invention is coupled between the front core 24 and the rear core 26 and between the front core 34 and the rear core 36.

Here, according to one embodiment of the present invention, the suction shell 20 is formed by the front core 24, the spar cap structure 100, and the rear core 26 being positioned between the outer skin 54 and the inner skin 52 and being coupled to each other, and the pressure shell 30 is formed by the front core 34, the spar cap structure 100, and the rear core 36 being positioned between the outer skin 64 and the inner skin 62 and being coupled to each other. Shear webs 42 and 44 positioned between the suction shell 20 and the pressure shell 30 are formed to be supported by shear web support members 120 and 130 of the spar cap structures 100.

Here, the suction shell 20 and the pressure shell 30 may be integrated using a vacuum infusion technique after placing the front cores 24 and 34, the spar cap structures 100, and the rear cores 26 and 36 on the outer skins 54 and 64, laminating the inner skins 52 and 62 thereon, and performing vacuum bagging thereof. Then, the integrated suction shell 20 and pressure shell 30 are adhered to each other to assemble the blade 10. Detailed description thereof will be given below.

The outer skins 54 and 64 and the inner skins 52 and 62 that form the suction shell 20 and the pressure shell 30 may be formed of a glass fiber composite material, a carbon fiber composite material, or a mixed material thereof and may be collectively referred to as "skin laminate layers."

Referring to FIGS. 3 and 4, a pair of shear webs 42 and 44 are formed to reinforce the structure inside the blade 10 while the suction shell 20 and the pressure shell 30 are coupled to each other, and in this way, stiffness against torsion of the blade 10 is improved. Here, although the pair of shear webs are described as being disposed between the suction shell and the pressure shell in the present embodiment, additional webs may be disposed in the blade when structural reinforcement is necessary.

Similar to a core member 110 of each spar cap structure 100, the shear webs 42 and 44 are made of a sandwich structure having a form in which a bar-shaped member made of balsa wood or PVC is surrounded by the skin laminate layers, and the shear webs 42 and 44 have coupling portions 43a and 45a at upper ends and coupling portions 43b and 45b at lower ends in order to be coupled to inner surfaces of the blade 10. The coupling portions 43a, 43b, 45a, and 45b may be referred to as "flanges" of the shear webs.

The coupling portions 43a, 43b, 45a, and 45b may be formed as portions that protrude rearward or forward from the upper ends and the lower ends of the shear webs 42 and 44. Here, the coupling portions 43a, 43b, 45a, and 45b may be coupled to the inner surfaces of the blade 10 by, for example, bonding.

The modular spar cap structures 100 according to one embodiment of the present invention are formed so that the shear webs 42 and 44 are not placed on a lower support member 140 that supports the core member 110. That is, the shear webs 42 and 44 are not formed to be coupled to or overlap with a position at which the core member 110 is formed.

To this end, the shear webs 42 and 44 may be coupled to substantially central portions of the shear web support members 120 and 130. However, the positions of the shear webs 42 and 44 coupled to the shear web support members 120 and 130 are not limited to the central portions of the shear web support members 120 and 130.

Referring to FIGS. 4 and 5, the modular spar cap structures 100 may each be formed to have a larger thickness than the front cores 24 and 34 and the rear cores 26 and 36 and may be coupled between the front cores 24 and 34 and the rear cores 26 and 36 after being manufactured in the form of modules.

More specifically, referring to FIG. 5, the modular spar cap structure 100 according to one embodiment of the present invention may be formed to include the core member 110, the shear web support members 120 and 130, an upper support member 150, and the lower support member 140.

The core member 110 is a component disposed at the center of the modular spar cap structure 100. For example, the core member 110 may be formed as a bar-shaped member having a rectangular cross-section that extends in a direction in which the blade 10 extends.

The core member 110 may be formed of a lightweight material, for example, balsa wood or PVC foam forming the front cores 24 and 34 and the rear cores 26 and 36, but the present invention s not limited thereto. The core member 110 is disposed at the center of the spar cap structure 100 to reduce the weight of the modular spar cap structure 100 and allow the spar cap structure to have a suitable thickness.

The shear web support members 120 and 130 are coupled to a front surface and a rear surface of the core member 110.

Referring to FIG. 5, for example, the shear web support members 120 and 130 may be formed in the shape of blocks having a rectangular cross-section. Here, according to one embodiment of the present invention, the shear web support members 120 and 130 may be formed to have a width of a predetermined length or more in the front-rear direction for the shear webs 42 and 44 to be supported by being coupled thereto.

As illustrated in FIG. 5, thicknesses of the shear web support members 120 and 130 may be larger than a thickness of the core member 110. Also, the shear web support members 120 and 130 may be made of a carbon fiber composite material so that a high support strength is maintained when the shear webs 42 and 44 are coupled to the shear web support members 120 and 130.

Here, the shear web support members 120 and 130 coupled to the front and rear of the core member 110 may be formed to have the same widths and heights, but the widths may not be the same according to design specifications, and the front and rear thereof may be made of different materials.

Meanwhile, as can be seen from FIG. 5, the upper support member 150 may be coupled to an upper portion of the core member 110, and the lower support member 140 may be coupled to a lower portion of the core member 110.

Here, the outer skin 54 may be coupled to an upper surface of the upper support member 150 to form an outer surface of the blade 10, and the inner skin 52 may be coupled to a lower surface of the lower support member 140 to form an inner surface of the blade 10.

The core member 110 may be formed of a lighter material than the upper support member 150 and the lower support member 140 to reduce the weight of the modular spar cap structure 100 and fill the space between the upper support member 150 and the lower support member 140.

The upper support member 150 and the lower support member 140 may be formed of a carbon fiber composite material or a glass fiber composite material. Here, the upper support member 150, the lower support member 140, and the shear web support members 120 and 130 may be made of the same material or different materials.

Here, although the upper support member 150 and the lower support member 140 are described as being separately provided from the shear web support members 120 and 130 in the present embodiment, when manufacturing the modularized spar cap structures, the upper support member and the lower support member may be manufactured to be integrally coupled to the shear web support members.

Also, the widths and thicknesses of the core member 110, the upper support member 150, and the lower support member 140 may be designed in various ways in consideration of a distance between the pair of shear webs 42 and 44 installed in the blade 10.

Referring to FIG. 6, areas resulting from excluding entire widths of the coupling portions at the upper ends or the lower ends of the shear webs from the overall widths of the modular spar cap structures according to one embodiment of the present invention are areas where the core members may be located.

Here, for example, the overall width (SCw) of each spar cap structure may range from 400 mm to 1,500 mm.

Here, for example, the overall width (FSWFw+RSWFw) of the coupling portions (flanges) of the shear webs may range from 180 mm to 800 mm.

Here, the width (Cw) of the core member may be 20% to 90% of the overall width (SCw) of the spar cap structure.

Here, the width (Cw) of the core member may be less than or equal to a difference between the overall width (SCw) of the spar cap structure and the overall width (FSWF_{W}+RSWF_{W}) of the coupling portions of the shear webs.

The sizes and ratios of the overall width of the spar cap structure, the widths of the coupling portions of the shear webs, and the width of the core member may vary according to the arrangement design of the spar cap structures and the shear webs and the shape of the blade.

Also, referring to FIG. 6, the thickness of the core member of the spar cap structure is smaller than the overall thickness of the spar cap structure.

Here, for example, the overall thickness (SCt) of the spar cap structure may range from 25 mm to 130 mm.

Here, for example, the thickness (Ct) of the core member may be 20% to 80% of the overall thickness of the spar cap structure.

The overall thickness (SCt) of the spar cap structure, the thickness (Ct) of the core member, and the ratio therebetween may vary according to stiffness design of the spar cap structures and the shape of the blade.

Here, the core member may be formed only in any one of the suction shell 20 and the pressure shell 30.

Meanwhile, according to one embodiment of the present invention, a height in a state in which the upper support member 150, the core member 110, and the lower support member 140 are laminated may be formed to be the same as the height of the shear web support members 120 and 130, and the modularized spar cap structure 100 may be formed to have a rectangular cross-section as a whole in a state in which the upper support member 150, the core member 110, the lower support member 140, and the shear web support members 120 and 130 are modularized and coupled. However, the cross-section of the modularized spar cap structure 100 or the overall cross-section of the core member 110, the upper support member 150, the lower support member 140, and the shear web support members 120 and 130 is not limited to having a rectangular shape and may have various other laminated shapes according to design.

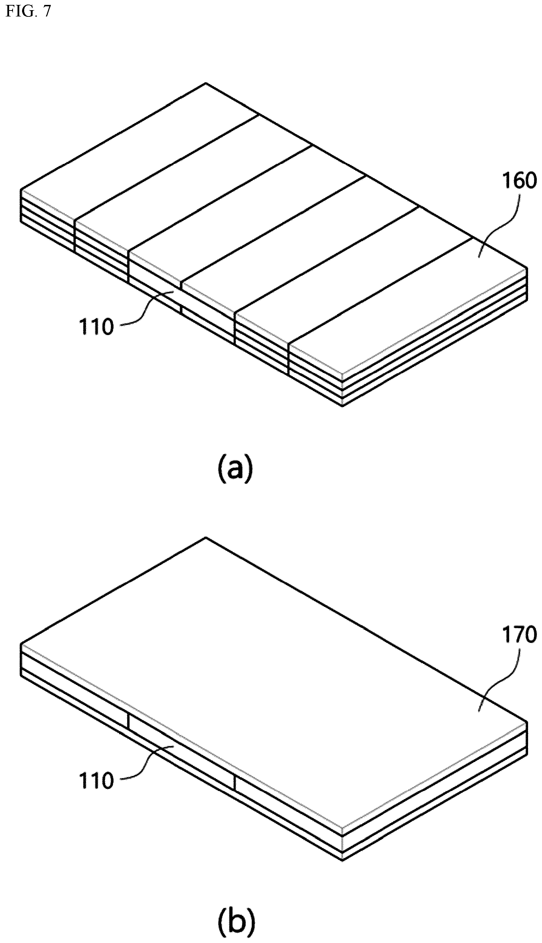

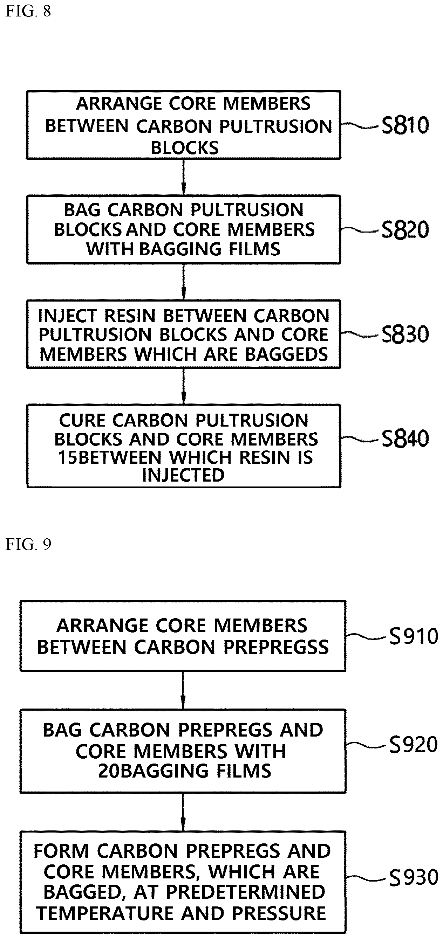

According to one embodiment of the present invention, carbon pultrusion blocks 160 or carbon prepregs 170 may be used to manufacture the modularized spar cap structure 100. FIG. 7A is a view illustrating an example in which the spar cap structure of the blade for a wind power generator according to one embodiment of the present invention is formed of carbon pultrusion blocks, and FIG. 7B is a view illustrating an example in which the spar cap structure of the blade for a wind power generator according to one embodiment of the present invention is formed of carbon prepregs. FIG. 8 is a flowchart illustrating one example of a method of manufacturing the spar cap structure of the blade for a wind power generator according to one embodiment of the present invention. FIG. 9 is a flowchart illustrating another example of a method of manufacturing the spar cap structure of the blade for a wind power generator according to one embodiment of the present invention.

Referring to FIGS. 7A and 8, when the spar cap structure 100 according to one embodiment of the present invention is manufactured using the carbon pultrusion blocks 160, the core members 110 may be placed between a plurality of carbon pultrusion blocks 160, and the plurality of carbon pultrusion blocks 160 and the core members 110 may be cured to manufacture the modular spar cap structure 100.

The carbon pultrusion block 160 is a composite material that is formed using a pultrusion technique and has the form of a plate having a thickness ranging from about 1 mm to 5 mm. A thickness of the carbon pultrusion block 160 may be selected as necessary.

According to one embodiment of the present invention, the plurality of carbon pultrusion blocks 160 may be disposed at side portions of the core members 110 to constitute the shear web support members 120 and 130, and the plurality of carbon pultrusion blocks 160 may be laminated at upper portions and lower portions of the core members 110 to constitute the upper support member and the lower support member.

A process of manufacturing the spar cap structure using the carbon pultrusion blocks 160 is as follows.

First, the core members 110 are disposed between the carbon pultrusion blocks to form the shape of the spar cap structure 100 (S810). Then, the carbon pultrusion blocks and the core members are bagged with a bagging film (S820).

Also, a resin is injected between the carbon pultrusion blocks 160 and the core members 110 which are bagged (S830). Then, the carbon pultrusion blocks 160 and the core members 110 between which the resin is injected are cured and modularized (S840).

Here, the carbon pultrusion blocks and the core members may be coupled by bonding instead injecting a resin and curing.

By the spar cap structure 100 for a blade that is manufactured through the above-described method, a single spar cap structure 100 may be used to manufacture the blade 10, or a plurality of spar cap structures 100 may be connected to manufacture the blade 10.

Meanwhile, referring to FIGS. 7B and 9, when the spar cap structure 100 according to one embodiment of the present invention is manufactured using the carbon prepregs 170, the core members 110 may be placed between a plurality of carbon prepregs 170, and a predetermined temperature and a predetermined pressure may be applied to the plurality of carbon prepregs 170 and the core members 110 to manufacture the spar cap structure 100.

The carbon prepreg 170 is a composite material that is in a pre-cured state after applying a resin on carbon fibers and has the form of a sheet having a thickness ranging from about 0.1 mm to 1.4 mm.

A process of manufacturing the spar cap structure according to one embodiment of the present invention using the carbon prepregs 170 is as follows.

First, the core members 110 are disposed between the carbon prepregs 170 as illustrated in FIG. 9 (S910). Then, the carbon prepregs 170 and the core members are bagged with a bagging film (S920).

Then, the carbon prepregs 170 and the core members 110, which are bagged, are formed by applying a predetermined temperature and a predetermined pressure to manufacture the modularized spar cap structure 100 (S930).

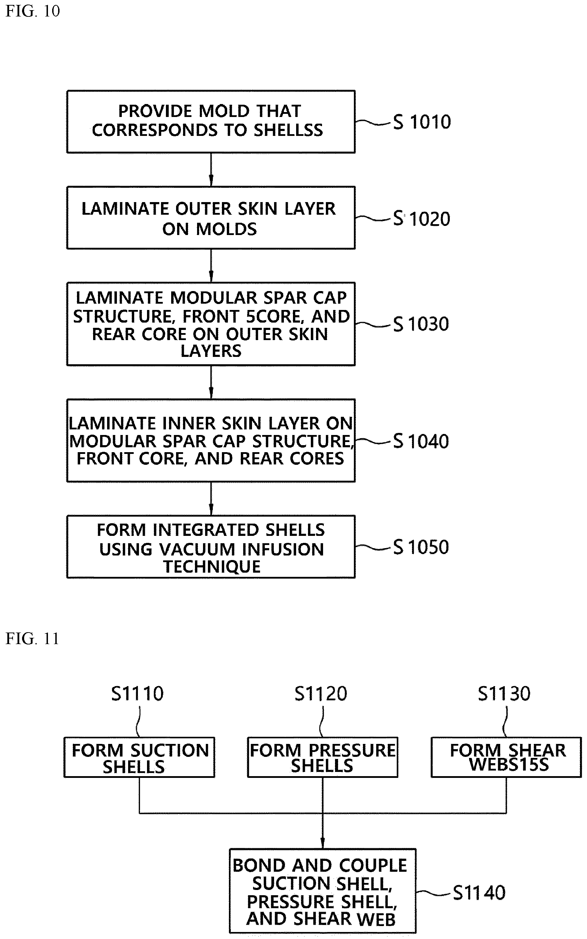

A method of manufacturing the suction shell 20 and the pressure shell 30 and a method of manufacturing the blade 10 that use the spar cap structure 100 manufactured by the above-described method will be described below with reference to FIGS. 10 and 11.

First, a mold that corresponds to the suction shell 20 and the pressure shell 30 is provided (S1010).

Then, an outer skin is laminated on the mold (S1020).

Then, the modular spar cap structure 100, the front cores 24 and 34, and the rear cores 26 and 36 are laminated on the outer skin (S1030).

Then, an inner skin is laminated on the modular spar cap structure 100, the front cores 24 and 34, and the rear cores 26 and 36 (S1040).

Then, the suction shell 20 and the pressure shell 30 are integrated using a vacuum infusion technique (S1050).

The suction shell 20 and the pressure shell 30, which are integrated as above, are formed (S 1110, S 1120), and shear webs are formed (S1130). Also, the pair of shear webs 24 and 44 are placed between the suction shell 20 and the pressure shell 30, and then, the suction shell 20, the pressure shell 30, and the shear webs 42 and 44 are bonded and coupled to each other to complete manufacturing the blade (S 1140).

The above-described process of manufacturing the blade for a wind power generator may further include various processes other than the processes described in the present embodiment, and the present invention does not preclude the possibility of including processes other than the processes described herein as processes for manufacturing the blade.

Also, those of ordinary skill in the art should easily understand that detailed description of methods of manufacturing parts other than the blade having the modular spar cap structure according to one embodiment of the present invention has been omitted in the present specification, and the blade manufacturing process has been described by focusing on the method of manufacturing the blade having the structure having the above-described features according to one embodiment of the present invention.

The blade for a wind power generator according to one embodiment of the present invention is configured so that the core member made of a lightweight material is placed at the center of the modular spar cap structure, and the shear web support members made of a carbon fiber material are disposed at both side portions of the core member.

Accordingly, since the pair of shear webs coupled to the spar cap structure have a predetermined interval therebetween and are supported by the shear web support members made of a carbon fiber material, it is possible to manufacture a blade having a structure that is highly resistant to torsion.

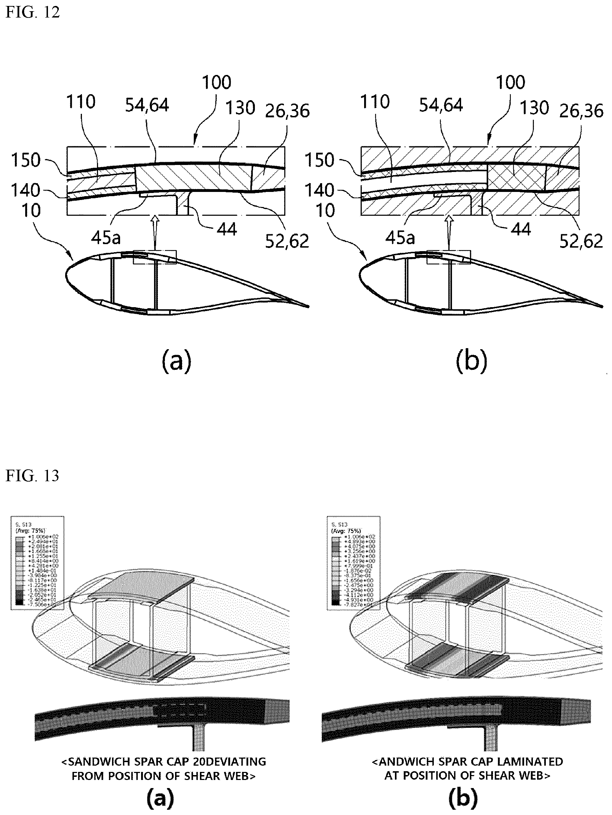

FIGS. 12 and 13 are views for comparing shear stress between a blade having a spar cap structure that has the structure according to one embodiment of the present invention (FIG. 12A) and a blade having a spar cap structure that has a shear web supported by a core member having a sandwich structure (FIG. 12B).

As illustrated in FIG. 12A, when the shear web is supported by a thick shear web support member, which is made of a carbon fiber material, at a position at which the shear web does not overlap with the core member according to one embodiment of the present invention, as can be seen from FIG. 13A, shear stress of 25 MPa, which is a value within 45 MW which is a designed shear strength of the material used in the shear web support member, acts on the shear web support member, and a structure that can withstand shear stress is formed.

In contrast, as illustrated in FIG. 12B, in the case of a blade having a spar cap structure in which a shear web is supported by a core member having a sandwich structure, as can be seen from FIG. 13B, shear stress of 4.9 MPa, which is a value exceeding 2 to 3 MPa which is a designed shear strength of the core member, acts on the core member, and a structure that cannot withstand shear stress is formed.

Major roles of a shear web in the structure of the blade are to simultaneously support a shear load between the suction shell and the pressure shell and constitute a torsion box together with a spar cap to prevent torsional behavior. Therefore, when a shear web is supported by the core member of the spar cap structure, even when a pair of shear webs are installed in the blade, since shear stress is not supported at the core member, and the torsion box structure collapses, it is difficult to provide a blade that is highly resistant to torsional stiffness.

On the other hand, when a shear web is supported by a thick shear web support member made of a carbon fiber material at a position at which the shear web does not overlap with the core member as in one embodiment of the present invention, since the shear web support member is able to support shear stress, and the torsion box structure is maintained, it is possible to provide a blade that is highly resistant to torsional stiffness.

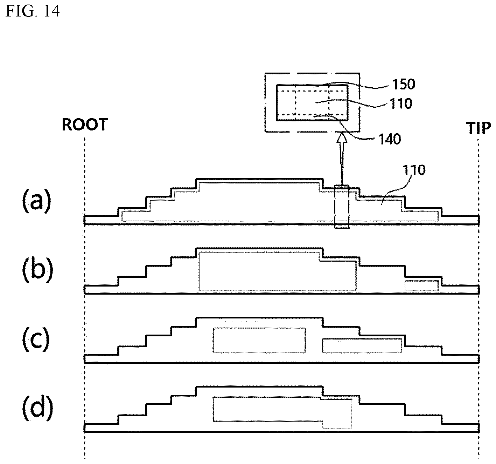

FIGS. 14A to 14D are views illustrating various examples of arranging the spar cap structure according to one embodiment of the present invention in a blade.

As illustrated in FIGS. 14A to 14D, the modular spar cap structure may be arranged throughout the blade from a root of the blade to a tip of the blade in a direction in which the blade extends or may be disposed only in a portion of the blade.

Here, the upper support member 150 and the lower support member 140 may be formed with the same thickness in a thickness direction of the modular spar cap structure and may be formed to be symmetrically laminated in the up-down direction in a cross-sectional view. When configured in this way, structural stiffness may be formed to be equivalent at an upper surface and a lower surface of the core member 110.

When composite materials are not formed to be symmetrically laminated, a deformation due to a load occurs in a direction irrelevant to the load in addition to occurring in a given load direction, and additional stress may be generated. According to one embodiment of the present invention, the modular spar cap structure is formed to be symmetrically laminated in the up-down direction in a cross-sectional view, and accordingly, structural stiffness is formed to be equivalent at an upper surface and a lower surface of the core member. Consequently, deformation does not occur in a direction irrelevant to the load, and behavior occurs only in a direction that matches the load direction, and accordingly, it is possible to secure structural stability of the modular spar cap structure.

Meanwhile, as can be seen from FIGS. 14B and 14C, one or more core members 110 may be disposed to be spaced apart in a direction from a root of the blade to a tip thereof in the modular spar cap structure according to one embodiment of the present invention. The installation positions, shape, number, and size of the core members may be changed in various ways in consideration of the design and manufacturing process according to the shear load and bending stiffness that affect the blade.

Embodiments of the present invention have been described above, but the spirit of the present invention is not limited by the embodiments presented herein, and those of ordinary skill in the art who understand the spirit of the present invention may easily propose other embodiments by adding other components, changing components, or omitting components within the scope of the same spirit. However, such embodiments also belong to the scope of the spirit of the present invention.

### [Industrial Applicability]

The present invention may be applied in manufacturing a blade for a wind power generator.

## Claims

1. A modular spar cap structure for a blade of a wind power generator, the modular spar cap structure comprising:
a core member formed in the shape of a bar that extends in a direction in which the blade extends;
shear web support members coupled to both side portions of the core member to support shear webs of the blade;
an upper support member coupled to an upper portion of the core member; and
a lower support member coupled to a lower portion of the core member,
wherein the core member, the shear web support members, the upper support member, and the lower support member are modularized.

2. The modular spar cap structure of claim 1, wherein the shear web support members are formed of a carbon fiber composite material.

3. The modular spar cap structure of claim 1, wherein the core member is formed of a lighter material than the shear web support members.

4. The modular spar cap structure of claim 1, wherein each of the core member, the shear web support members, the upper support member, and the lower support member which are modularized has a rectangular parallelepiped shape.

5. The modular spar cap structure of claim 1, wherein the core member, the shear web support members, the upper support member, and the lower support member which are modularized have a rectangular parallelepiped shape.

6. The modular spar cap structure of claim 1, wherein a front-rear width of the core member and a front-rear width of each of the upper support member and the lower support member are the same.

7. The modular spar cap structure of claim 1, wherein thicknesses of the upper support member and the lower support member are the same.

8. The modular spar cap structure of claim 1, wherein the shear web support members are disposed between the upper support member and the lower support member.

9. The modular spar cap structure of claim 1, wherein a width of the core member is 20% to 90% of a width of the spar cap structure.

10. The modular spar cap structure of claim 1, wherein a width of the core member is less than or equal to a difference between a width of the spar cap structure and a sum of widths of coupling portions of the shear webs coupled to the shear web support members.

11. The modular spar cap structure of claim 1, wherein a thickness of the core member is 20% to 80% of the overall thickness of the spar cap structure.

12. The modular spar cap structure of claim 1, wherein each of the shear web support members, the upper support member, and the lower support member includes at least one carbon pultrusion block.

13. The modular spar cap structure of claim 1, wherein each of the shear web support members, the upper support member, and the lower support member includes at least one carbon prepreg.

14. A manufacturing method of a modular spar cap structure for a blade of a wind power generator, the manufacturing method comprising:
a core member and support member providing operation of providing a core member formed in a bar shape, shear web support members coupled to both side portions of the core member, an upper support member coupled to an upper portion of the core member, and a lower support member coupled to a lower portion of the core member;
a bagging operation of bagging the core member, the shear web support members, the upper support member, and the lower support member with a bagging film; and
a modularizing operation of coupling the core member, the shear web support members, the upper support member, and the lower support member which are bagged.

15. The manufacturing method of claim 14, wherein:
each of the shear web support members, the upper support member, and the lower support member includes at least one carbon pultrusion block; and
the modularizing operation includes an operation of injecting a resin between the core member, the shear web support members, the upper support member, and the lower support member which are bagged and an operation of curing the resin.

16. The manufacturing method of claim 14, wherein:
each of the shear web support members, the upper support member, and the lower support member includes at least one carbon prepreg; and
in the modularizing operation, the core member, the shear web support members, the upper support member, and the lower support member which are bagged are modularized by being formed at a predetermined temperature and a predetermined pressure.

17. A blade for a wind power generator, the blade comprising:
a suction shell;
a pressure shell coupled to a lower portion of the suction shell; and
a pair of shear webs coupled between the suction shell and the pressure shell,
wherein at least one of the suction shell and the pressure shell includes a core member formed in the shape of a bar that extends in a direction in which the blade extends, and
the pair of shear webs are coupled between the suction shell and the pressure shell in an up-down direction to not overlap with the core member.

18. The blade of claim 17, further comprising shear web support members coupled to both side portions of the core member and formed of a carbon fiber composite material to support the shear webs of the blade,
wherein both ends of the pair of shear webs are formed to be supported by the shear web support members provided at the suction shell and the pressure shell.

19. The blade of claim 18, wherein each of the suction shell and the pressure shell further includes:
an upper support member coupled to an upper portion of the core member; and
a lower support member coupled to a lower portion of the core member.

20. The blade of claim 19, wherein the core member, the shear web support members, the upper support member, and the lower support member are modularized.

21. A manufacturing method of a blade for a wind power generator, the manufacturing method comprising:
an operation of providing a mold that corresponds to a suction shell and a pressure shell;
an operation of laminating an outer skin layer on the mold;
providing the modular spar cap structure of any one of claims 1 to 13, a front core disposed in front of the spar cap structure, and a rear core disposed behind the spar cap structure on the outer skin layer;
laminating an inner skin layer on the modular spar cap structure, the front core, and the rear core;
integrating the suction shell and the pressure shell using a vacuum infusion technique; and
coupling the suction shell, the pressure shell, and a pair of shear webs that support the suction shell and the pressure shell.
